# FASCICULE DE BREVET EUROPEEN

(11) **EP 3 890 468 B1**
(45) Date de publication et mention de la délivrance du brevet: **23.10.2024**
(21) Numéro de dépôt: 19813552.7
(22) Date de dépôt: 06.12.2019
(51) Int. Cl.: A01F 29/00

(54) **MACHINE POUR DÉFAIRE ET DISTRIBUER DES BOTTES DE LITIÈRE ANIMALE OU DES BOTTES DE FOURRAGE**
MASCHINE ZUM LÖSEN UND AUSGEBEN VON BALLEN AUS TIERSTREU ODER FUTTERBALLEN
MACHINE FOR UNDOING AND DISPENSING BALES OF ANIMAL LITTER OR BALES OF FODDER

(30) Priorité: 07.12.2018 FR 1872484
(43) Date de publication de la demande: 13.10.2021
(73) Titulaire: Etablissements Emily, 29800 Tréflévénez (FR)
(72) Inventeur: RUNGOAT, David, 29800 TREFLEVENEZ (FR); MIOSSEC, Arnaud, 29440 PLOUZEVEDE (FR)
(74) Mandataire: Cabinet Le Guen Maillet
(86) Numéro de dépôt international: PCT/EP2019/083993
(87) Numéro de publication internationale: WO 2020/115278

(56) Documents cités:
- EP-A1- 2 314 150
- EP-A1- 3 033 938
- FR-A1- 3 007 241

## Description

La présente invention concerne une machine pour défaire et distribuer des bottes de litière animale ou des bottes de fourrage. De telles bottes ont préalablement été formées par compactage, puis entourées de liens, d'un filet ou d'une enveloppe de protection pour les maintenir dans leur état compacté ou pour les protéger des intempéries. Ces bottes de fourrage ainsi produites sont stockées et utilisées le moment venu, sous la forme de fourrage pour l'alimentation des animaux d'élevage ou encore sous la forme de litières.

Une telle botte présente une géométrie typiquement parallélépipédique ou cylindrique.

Pour défaire et distribuer une telle botte, il est connu d'utiliser une machine communément appelée machine de paillage. Celle-ci comprend de manière connue, un organe de paillage, un moyen d'amenage de la botte en direction de l'organe de paillage. On place une botte sur le moyen d'amenage, on démarre l'organe de paillage et on utilise le moyen d'amenage. La botte entre alors en contact avec l'organe de paillage et elle est déchiquetée par celui-ci, puis éparpillée, par exemple sur le sol.

La botte de fourrage étant enveloppée, il convient avant de procéder à son paillage, de retirer le lien, le filet ou l'enveloppe de protection qui l'entoure. La solution la plus simple consiste pour l'intervenant, à débarrasser la botte de son moyen de conditionnement, en le coupant, par exemple à l'aide d'un couteau. L'intervenant doit ensuite tirer sur celui-ci pour le retirer.

Dans la publication FR-A1-3007241, est présentée une pailleuse équipée d'un dispositif pour couper et retirer les liens qui confinent une botte cylindrique. Le dispositif comprend, d'une part, une scie disposée à l'avant de la machine et qui est mobile en direction de la botte, à l'aide d'un vérin électrique, de sorte à sectionner les liens, et d'autre part, un rouleau disposé à l'arrière de la machine et qui est relié à un moteur hydraulique d'entraînement à rotation. La scie est disposée pour couper les liens dans la partie supérieure de la botte.

Après avoir été coupés par la scie, la partie supérieure des liens de la botte étant facilement accessible, ceux-ci sont tirés manuellement vers le rouleau et sont enroulés sur ce rouleau manuellement et maintenus grâce à des crochets fixés sur celui-ci.

La machine dispose d'un interrupteur-poussoir de mise en marche du rouleau qui tourne sur lui-même et d'un tapis roulant sans fin qui fait tourner la botte dans la machine pour permettre aux liens de se libérer dans la partie inférieure et d'aller s'enrouler autour du rouleau. Dès que les liens sont entièrement libérés de la botte et enroulés autour du rouleau, on relâche l'interrupteur et le système s'arrête. Ainsi, la botte est prête à être distribuée aux animaux. Il suffit alors simplement de tirer manuellement sur les liens enroulés autour du rouleau ultérieurement pour les enlever.

La construction de cette machine est relativement complexe. La présence du rouleau est indispensable pour extraire les liens du pourtour de la botte.

Par ailleurs, elle ne peut retirer les liens, le filet ou le film de protection, que de bottes cylindriques.

Quand une pailleuse d'un autre type est dépourvue de rouleau d'extraction, il arrive fréquemment que les liens soient très difficiles à retirer, voire impossibles à retirer.

Le but de l'invention est donc de proposer une machine pour défaire et distribuer des bottes de litière animale ou des bottes de fourrage, d'une construction plus simple et apte à traiter des bottes cylindriques et des bottes parallélépipédiques.

A cet effet, est proposée une machine pour défaire et distribuer des bottes de litière animale ou des bottes de fourrage, comprenant,
- une paroi de fond destinée à réceptionner la botte,
- un organe d'éjection de la matière constitutive de la botte ou un organe de déroulement de la botte,
- un dispositif de coupe du lien, du filet ou de l'enveloppe de protection qui entoure ladite botte et qui inclut un organe de coupe ; selon l'invention, le dispositif de coupe est disposé dans la paroi de fond ou dans son prolongement ou dans son voisinage et de sorte qu'il soit disposé à l'endroit où repose la botte ou dans le voisinage de l'endroit où repose la botte et qu'il puisse agir dans la partie basse de la botte,.

Lorsque la botte est chargée sur la paroi de fond, le dispositif de coupe peut alors couper le lien, le filet ou l'enveloppe de protection qui entoure ladite botte. L'effort nécessaire pour retirer de la botte le lien, le filet ou l'enveloppe de protection est moins important car il peut être tiré des deux côtés de la botte. Le retrait peut être réalisé manuellement.

Selon une caractéristique additionnelle de l'invention, le dispositif de coupe comprend au moins un couteau monté de manière mobile transversalement par rapport à ladite paroi de fond.

Pendant son déplacement, le couteau peut ainsi trancher le lien, le filet ou l'enveloppe de protection qui entoure ladite botte.

Selon une caractéristique additionnelle de l'invention, le dispositif de coupe comprend deux couteaux montés à coulissement l'un vers l'autre.

En se rapprochant, les deux couteaux coupent le moyen de conditionnement de la botte sans la décaler latéralement, du fait de la symétrie des efforts exercés par les deux couteaux sur la botte.

Selon une caractéristique additionnelle de l'invention, ledit ou chaque couteau est attelé à un moyen de manoeuvre à mouvement linéaire.

Ce moyen de manoeuvre peut avantageusement être constitué d'un vérin hydraulique.

Selon une caractéristique additionnelle de l'invention, la partie tranchante dudit ou de chaque couteau présente, en vue de face, une géométrie triangulaire, les deux flancs du couteau étant tranchants.

Cette géométrie du couteau lui permet de couper dans son trajet « aller » le moyen de conditionnement de la botte et, le cas échéant, de finir de le couper dans son trajet « retour ».

Selon une caractéristique additionnelle de l'invention, chaque couteau est prolongé d'une lame de guidage qui est tournée en direction de l'autre couteau, les deux lames de guidage étant disposées parallèlement et à faible distance l'une à l'autre, les deux lames de guidage étant en appui, par leur chant inférieur, sur une barre de frottement pour être guidées pendant leur déplacement.

Les deux couteaux sont soutenus pendant leur travail.

Selon une caractéristique additionnelle de l'invention, la machine est pourvue d'un dispositif d'attelage, destiné à permettre à un engin de manutention, d'atteler la machine pour la porter, la manoeuvrer et la machine est pourvue,
d'un caisson de réception d'une botte,
d'un moyen de déplacement de la botte en direction de l'organe d'éjection,
d'une porte de chargement et de transfert d'une botte, ladite porte étant montée de manière articulée sur le caisson entre une position de chargement d'une botte et une position de transfert de ladite botte dans le caisson, ladite porte incluant la paroi de fond pour la botte, le dispositif de coupe étant monté dans la porte.

La machine est avantageusement utilisée pour charger une botte, la transférer jusqu'à son lieu d'utilisation. Le moyen de conditionnement de la botte peut être tranché puis retiré. Elle peut ensuite être défaite et éparpillée.

Avantageusement, la paroi de fond de la botte comprend une paroi concave conformée pour réceptionner la paroi cylindrique d'une botte cylindrique, le dispositif de coupe étant disposé pour pouvoir couper le moyen de conditionnement de la botte lorsqu'elle est positionnée dans la paroi concave.

Le moyen de conditionnement de la botte cylindrique maintenue en position est tranché précisément.

En variante de réalisation, la machine est pourvue d'un dispositif d'attelage, destiné à permettre à un engin de manutention, d'atteler la machine pour la porter, la manoeuvrer et la machine est pourvue,
d'un caisson de réception d'une botte incluant la paroi de fond pour la botte,
le dispositif de coupe étant monté dans la paroi de fond ou dans le prolongement de la paroi de fond pour la botte.

La machine est avantageusement utilisée pour charger une botte, la transférer jusqu'à son lieu d'utilisation. Le moyen de conditionnement de la botte peut être tranché puis retiré. Elle peut ensuite être défaite et éparpillée.

En variante de réalisation, la machine est montée sur un châssis roulant,
la machine étant pourvue d'un attelage comprenant un crochet, destiné à permettre à un engin de traction, d'atteler la machine pour la tracter et la machine est pourvue,
d'un caisson de réception d'une botte,
d'un moyen de déplacement de la botte en direction de l'organe d'éjection, le moyen de déplacement incluant la paroi de fond pour la botte.

La machine est avantageusement utilisée pour charger une botte, la transférer jusqu'à son lieu d'utilisation. Le moyen de conditionnement de la botte peut être tranché puis retiré. Elle peut ensuite être défaite et éparpillée.

En variante de réalisation, la machine est pourvue d'un dispositif d'attelage, destiné à permettre à un engin de manutention, d'atteler la machine pour la porter, la manoeuvrer et la machine est pourvue,
d'un caisson de réception d'une botte cylindrique,
d'un organe de déroulement de la botte cylindrique, incluant une portion concave de positionnement de la botte prolongée par une portion ascendante orientée vers l'extérieur de ladite machine,
l'organe de déroulement incluant la paroi de fond pour la botte.

La machine est avantageusement utilisée pour charger une botte, la transférer jusqu'à son lieu d'utilisation où son moyen de conditionnement peut être tranché puis retiré. Elle peut ensuite être déroulée.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
[Fig. 1] représente une vue en perspective avant d'une machine de type porté, pour défaire et distribuer des bottes de litière animale ou des bottes de fourrage selon l'invention,
[Fig. 2] représente une vue en perspective arrière d'une machine de type porté, pour défaire et distribuer des bottes de litière animale ou des bottes de fourrage selon l'invention,
[Fig. 3] représente une vue en perspective avant d'une machine de type porté, pour défaire et distribuer des bottes de litière animale ou des bottes de fourrage et dont la porte d'accès est placée dans une position d'ouverture selon l'invention,
[Fig. 4] représente une vue latérale d'une machine de type porté, pour défaire et distribuer des bottes de litière animale ou des bottes de fourrage et d'une botte cylindrique en cours de chargement selon l'invention,
[Fig. 5] représente une vue en perspective d'un dispositif de coupe pour une machine pour défaire et distribuer des bottes de litière animale ou des bottes de fourrage selon l'invention,
[Fig. 6] représente une vue schématique longitudinale d'un dispositif de coupe pour une machine pour défaire et distribuer des bottes de litière animale ou des bottes de fourrage selon l'invention,
[Fig. 7] représente une vue en coupe transversale d'un dispositif de coupe pour une machine pour défaire et distribuer des bottes de litière animale ou des bottes de fourrage selon l'invention,
[Fig. 8] représente une vue latérale d'une machine de type porté, pour défaire et distribuer des bottes de litière animale ou des bottes de fourrage et d'une botte parallélépipédique en cours de chargement selon l'invention,
[Fig. 9] représente une vue latérale schématique d'une première variante de réalisation d'une machine de type porté, pour défaire et distribuer des bottes de litière animale ou des bottes de fourrage, dépourvue de porte de chargement selon l'invention,
[Fig. 10] représente une vue latérale schématique d'une seconde variante de réalisation d'une machine de type porté, pour défaire et distribuer des bottes de litière animale ou des bottes de fourrage, dépourvue de porte de chargement et de moyen de déplacement de la botte selon l'invention,
[Fig. 11] représente une vue latérale schématique d'une troisième variante de réalisation d'une machine de type tracté, pour défaire et distribuer des bottes de litière animale ou des bottes de fourrage, portée sur un châssis roulant selon l'invention,
[Fig. 12] représente une vue latérale schématique d'une quatrième variante de réalisation d'une machine de type tracté, pour défaire et distribuer des bottes de litière animale ou des bottes de fourrage, portée sur un châssis roulant selon l'invention et,
[Fig. 13] représente une vue latérale d'une cinquième variante de réalisation d'une machine de type porté, pour défaire et dérouler une botte cylindrique de litière animale ou de fourrage selon l'invention.

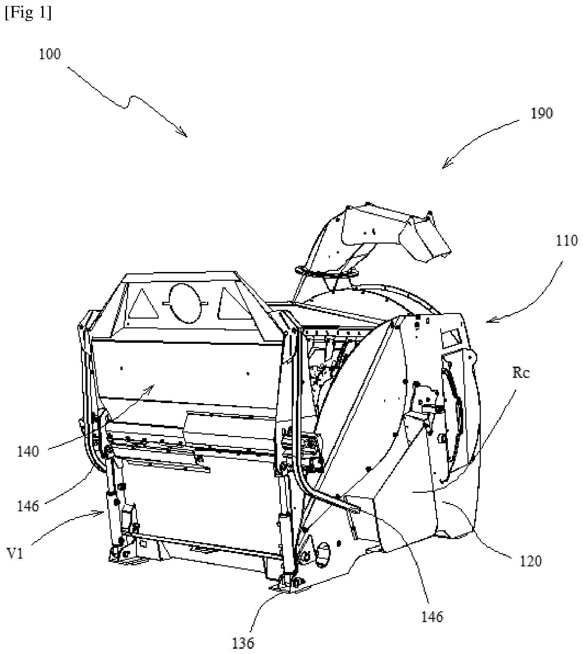

La machine 100 qui est présentée sur les Figs. 1, 2 et 3, est destinée à défaire et à distribuer des bottes de litière animale ou des bottes de fourrage. Ces bottes sont faites d'une matière végétale préalablement comprimée, utilisée comme fourrage ou pour préparer une litière aux animaux, telle que de la paille ou encore du foin.

Cette matière se présente généralement sous la forme de bottes cylindriques ou de bottes parallélépipédiques comprimées. Dans la suite de cette description, on utilisera le terme générique de botte pour désigner cette matière comprimée. La botte est entourée de liens, d'un filet ou d'une enveloppe de protection pour la maintenir dans son état compacté ou pour la protéger de l'humidité.

La machine 100 est du type porté, c'est-à-dire comprenant un dispositif d'attelage 250 pouvant coopérer avec un attelage correspondant d'un engin porteur de manutention.

La machine 100 est définie d'un point de vue structurel par un caisson 110 délimité par deux parois latérales 120, une porte d'accès 140 placée à l'extrémité avant de la machine entre les deux parois latérales, une paroi arrière 160 incluant la volute 170 d'une turbine (non visible sur ces Figs.) placée à l'autre extrémité de la machine et également située entre les deux parois latérales. On note encore la présence d'un moyen de déplacement 200 d'une botte préalablement chargée sur la porte 140. La fonction de la porte 140 est de charger une botte et de transférer ladite botte sur le moyen de déplacement 200.

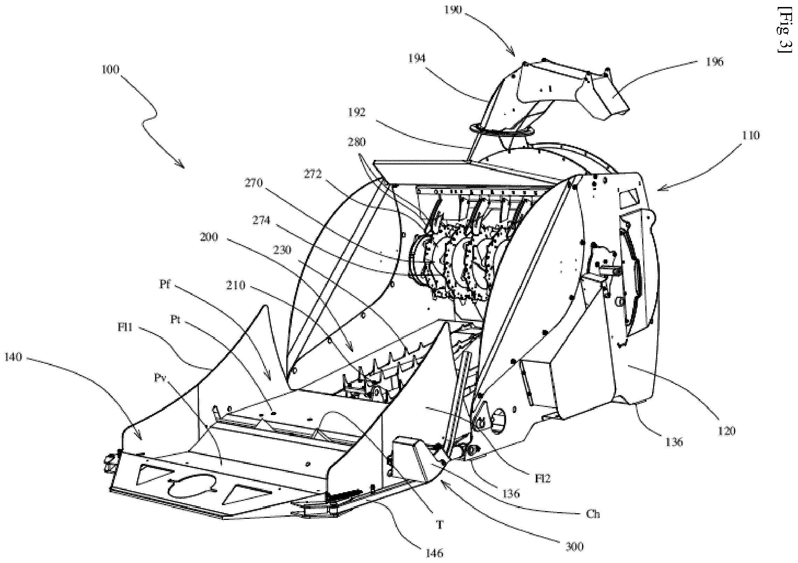

Sur la Fig. 3, le caisson 110 est fixé autour d'un châssis intégrant en particulier des longerons, des traverses et des pieds d'assise 136 sur lesquels la machine peut reposer au sol.

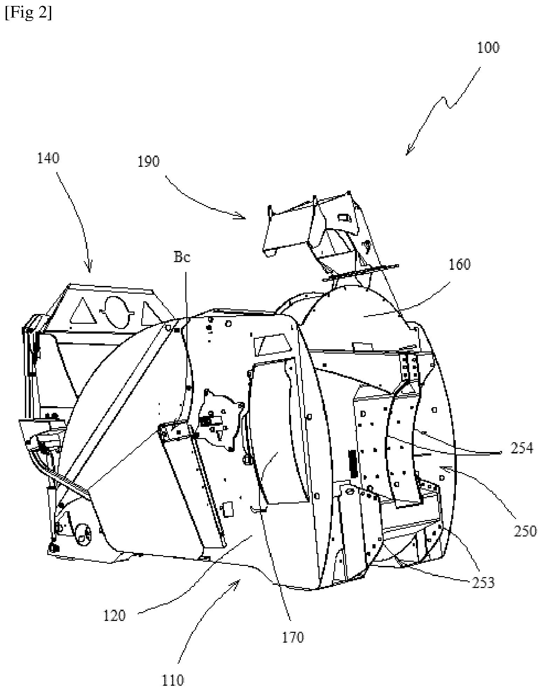

Sur la Fig. 2, le dispositif d'attelage 250 est monté entre les deux parois latérales 120, à l'arrière de la volute 170 pour permettre à un engin de manutention, tel qu'un tracteur agricole ou un engin pourvu d'un bras télescopique, d'atteler la machine pour la porter, la manoeuvrer et la faire fonctionner. Il comprend des plaques 253, 254, qui s'étendent perpendiculairement sur la paroi arrière 160.

Des moyens de raccordement électriques, hydrauliques et mécaniques, non représentés, sont installés à ce niveau pour pouvoir être connectés avec des équipements de l'engin.

Sur la Fig. 1, la porte 140 est montée de manière articulée sur le caisson 110 et à la base de la machine. Elle est pourvue d'un moyen de manoeuvre V1 apte à la déplacer entre une position d'ouverture et de chargement, visible sur la Fig. 3, dans laquelle elle est disposée d'une manière quasi horizontale pour permettre la réception d'une botte et une position de fermeture, visible sur la Fig. 1, où elle peut retenir la botte dans le caisson de ladite machine. La botte est transférée dans le caisson pendant le mouvement de fermeture de la porte 140.

Le moyen de manoeuvre V1 est constitué, dans un mode préféré de réalisation, d'une paire de vérins hydrauliques avantageusement alimentés par le circuit hydraulique de l'engin. L'ancrage des vérins est judicieusement prévu dans les piètements 136 bordant les parois latérales 120.

La porte 140 comprend, sur la Fig. 3, deux flasques latéraux Fl1, F12, réunis par l'intermédiaire d'une paroi de fond Pf.

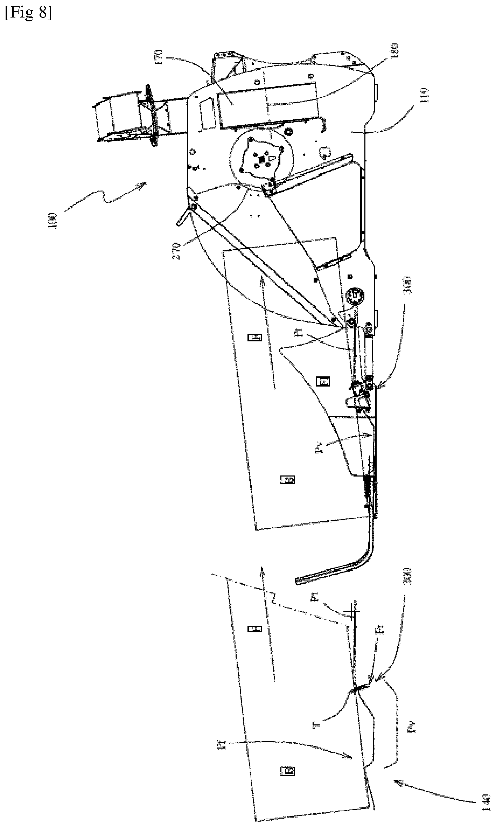

Deux tubes coudés 146, formant un moyen de retenue, sont montés de manière articulée dans le plan de la porte 140. Ils sont utilisés, après repliement dans le prolongement de la porte 140, pour retenir une botte parallélépipédique dans la machine comme cela apparaît sur la Fig. 8, ou plusieurs bottes cylindriques alors que la porte demeure dans une position de quasi ouverture.

Sur la Fig. 3, un démêleur rotatif 270 est monté à rotation entre les deux parois latérales 120, à proximité de la volute 170 et à mi-hauteur du caisson pour rogner la botte afin de la déstructurer avant de renvoyer la matière qui la compose vers la turbine. Le démêleur rotatif 270 est entraîné à rotation par l'intermédiaire d'un moteur et de préférence par un moteur hydraulique alimenté par le circuit hydraulique de l'engin.

Le démêleur rotatif 270 est constitué d'un cylindre 272, à la périphérie duquel sont disposés des couteaux 274 destinés à arracher la matière constitutive de la botte.

Le moteur hydraulique est avantageusement logé dans le cylindre pour conserver une efficacité constante sur toute la largeur du démêleur rotatif. Les couteaux 274 sont constitués de portions cylindriques pourvues de dents d'arrachement et qui sont disposées entre des portions d'hélicoïdes également pourvues de dents d'arrachement afin de rogner efficacement la périphérie d'une botte cylindrique sur toute sa largeur, indépendamment de son sens d'enroulement ou la face frontale d'une botte parallélépipédique. Le sens de rotation du démêleur est tel qu'il projette la matière dans la volute.

Des peignes 280 solidaires d'une traverse réunissent les deux parois latérales 120 de manière à limiter l'avancement de la botte alors qu'elle est entraînée par le moyen de déplacement 200 en direction du démêleur 270, pour éviter un bourrage de celui-ci. Les peignes sont de préférence positionnés au-dessus du démêleur rotatif 270. Ils présentent en vue de côté un profil concave tourné vers l'intérieur de la machine. Certains de ces peignes sont disposés dans le plan des portions cylindriques du démêleur pour accroître leur efficacité.

Sur la Fig. 2, la volute 170 se présente sous la forme d'une paroi cylindrique fermée par la paroi arrière 160 et ouverte vers l'intérieur de la machine pour recevoir la matière arrachée par le démêleur.

La turbine est disposée dans la volute 170 pour récupérer la matière végétale déstructurée par le démêleur rotatif 270 afin de l'expulser au travers d'une goulotte 190 raccordée à ladite volute afin qu'elle puisse être distribuée à un endroit déterminé.

La turbine comprend une pluralité de pales entraînées à rotation autour d'un axe, par l'intermédiaire d'un moteur et de préférence par un moteur hydraulique alimenté par le circuit hydraulique de l'engin. Avantageusement, le moteur entraîne directement ladite turbine par son axe de rotation pour accroître le rendement de fonctionnement de la machine. La turbine constitue un organe d'éjection dans la machine 100.

Sur les Figs. 1 et 2, la goulotte 190 prolonge vers le haut la sortie de la volute. Elle est constituée d'une tubulure 192 raccordée à la volute par l'intermédiaire d'un manchon rotatif 194 lui procurant la faculté de tourner pour projeter la matière à la périphérie de la machine. Un moyen d'entraînement, tel qu'un moteur hydraulique pourvu d'un pignon apte à entraîner une couronne dentée solidaire de la tubulure 192, dans le manchon rotatif, permet de faire tourner cette tubulure. Celle-ci est terminée par un bec 196 dont l'inclinaison en hauteur est susceptible d'être modifiée par l'intermédiaire d'un moyen de manoeuvre pour régler la distance de projection de la matière. Ce moyen de manoeuvre est, de préférence, constitué d'un vérin électrique alimenté par le circuit électrique de l'engin. Ce vérin électrique procure un fonctionnement plus doux et précis qu'un vérin hydraulique. La matière peut ainsi être déposée en poste fixe sur la surface d'élevage d'une stabulation en agissant sur la position de la goulotte.

Dans une variante de réalisation, non représentée, le moyen d'entraînement de la turbine est constitué d'une transmission mécanique utilisant le couple moteur fourni par la prise de force de l'engin. Le moyen d'entraînement comprend un cardan attelé à un boîtier à engrenage qui entraîne l'arbre portant la turbine.

Dans une variante de réalisation, non représentée, le moyen d'entraînement du démêleur est constitué d'une transmission mécanique utilisant le couple moteur fourni par la prise de force de l'engin. Le moyen d'entraînement comprend un cardan attelé à un boîtier de renvoi d'angle mécanique et dont la sortie est reliée à une transmission par chaîne(s) et pignons ou par courroie(s) et poulies et qui entraîne l'arbre portant le démêleur. La sortie du renvoi d'angle mécanique peut encore être reliée à une seconde transmission à double renvoi d'angle mécanique qui entraîne l'arbre portant le démêleur.

Les deux types d'entraînements hydraulique et mécanique peuvent être mis en oeuvre dans la machine pour entraîner la turbine et le démêleur.

Sur la Fig. 3, le moyen de déplacement 200 est susceptible de déplacer la botte dans la machine en direction du démêleur rotatif 270, afin que les fibres végétales qui la constituent puisse être désenchevêtrées, puis éparpillées par la turbine.

Le moyen de déplacement 200 comprend, sur cette Fig. 3, au moins un fond fixe 210 sur lequel repose, en partie, la botte à l'issue de son chargement dans la machine, au moins un entraîneur 230 susceptible d'être animé d'un mouvement cyclique apte à entraîner ladite botte en la soulevant pour la surélever du fond fixe et en la déplaçant, par mouvements successifs.

Un entraîneur 230 est disposé entre deux fonds fixes 210. La botte peut ainsi reposer latéralement sur les fonds fixes alors que l'entraîneur placé en position centrale peut la soulever de manière cyclique dans sa partie médiane pour la faire avancer en direction du démêleur rotatif.

Dans une variante de réalisation, non représentée, le moyen d'entraînement comprend des tasseaux fixés transversalement sur une paire de chaînes pouvant circuler en boucle autour de deux paires de pignons, chaque paire étant solidaire d'un arbre. L'un des arbres est relié à un moyen d'entraînement à rotation, tel qu'un moteur hydraulique. Le châssis de la machine comprend une paroi de fond et les tasseaux peuvent être déplacés sur la paroi de fond pour entraîner une botte en direction du démêleur.

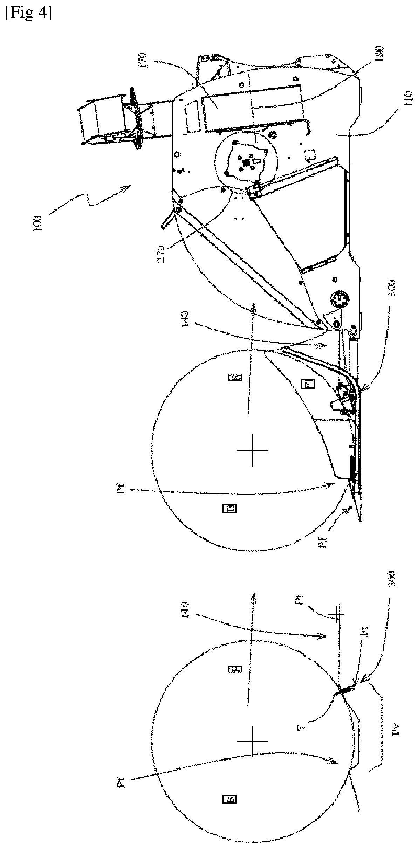

Dans l'invention, et en référence aux Figs. 3 et 4, la machine 100 est pourvue d'un dispositif de coupe 300 destiné à couper les liens, le filet ou l'enveloppe de protection qui ceinture la botte.

La paroi de fond Pf est destinée à réceptionner une botte B de type cylindrique ou de type parallélépipédique. Elle forme ainsi une paroi de réception pour une botte cylindrique ou parallélépipédique. Elle comprend une paroi concave Pv qui s'étend transversalement et dans laquelle peut prendre une botte B de type cylindrique en attente d'être paillée, alors que la porte 140 est disposée dans sa position d'ouverture. La botte B est sur la Fig. 4, une botte cylindrique. Elle demeure calée en avant et en arrière dans la paroi concave Pv, l'empêchant de rouler.

La paroi de fond Pf comprend encore, sur la Fig. 3, une paroi de transfert Pt qui prolonge la paroi concave Pv en direction du moyen de déplacement 200. Cette paroi de transfert Pt est utilisée pour amener la botte vers le moyen de déplacement 200 pendant la fermeture de la porte 140. La paroi de transfert Pt sert également de paroi de réception pour une botte parallélépipédique.

Le dispositif de coupe 300 est disposé transversalement à la sortie de la cuvette Pv en considérant le sens d'avancement F de la botte vers le démêleur 270 (Fig. 4) et de sorte à pouvoir agir dans la partie basse de la botte. On peut ainsi tirer facilement sur une extrémité coupée du lien, du filet ou de l'enveloppe, pour l'extraire.

Le dispositif de coupe 300 comprend un organe de coupe T. L'organe de coupe inclut au moins un couteau T susceptible de pénétrer la matière de la botte ainsi disposée.

La paroi concave Pv et la paroi de transfert Pt sont séparées par une fente Ft et au travers de laquelle est disposé ledit couteau.

La paroi de transfert Pt est dans un mode de fabrication préféré, plane pour faciliter le glissement du lien, du filet ou de l'enveloppe de protection, pendant son retrait.

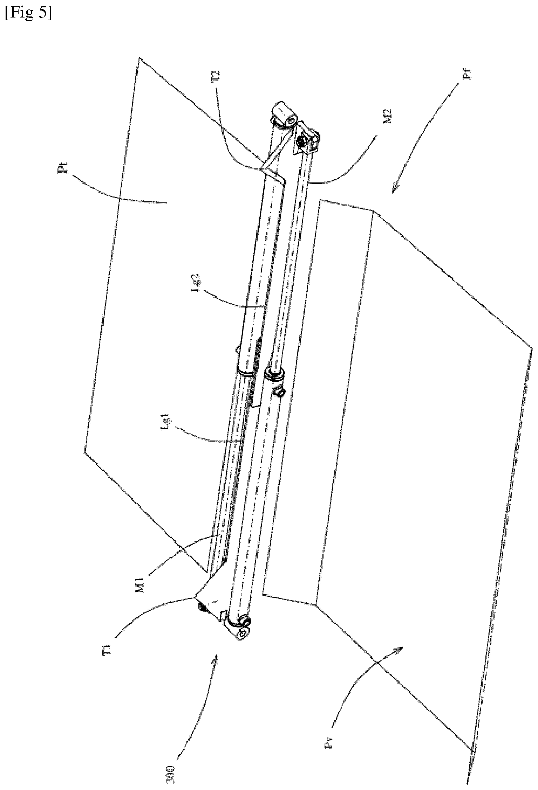

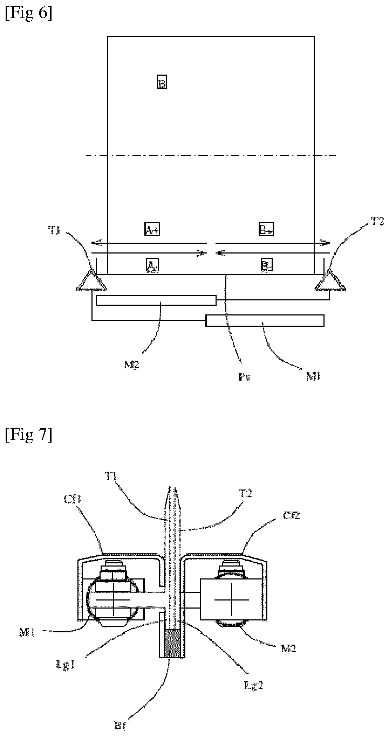

Sur la Fig. 5, le dispositif de coupe 300 comprend deux couteaux T1 et T2 mobiles transversalement à la frontière de la paroi concave Pv. A cet effet, les deux couteaux T1 et T2 sont respectivement attelés à deux moyens de manoeuvre M1 et M2 à mouvement linéaire, tels que deux vérins hydrauliques pouvant être raccordés au circuit hydraulique de l'engin de manutention. Ils sont disposés de telle sorte que pendant leur fonctionnement les deux couteaux peuvent se rapprocher mutuellement l'un de l'autre ou s'éloigner mutuellement l'un de l'autre. Cette situation est présentée sur la Fig. 6, où l'on voit en vue de face, une botte B cylindrique et sous laquelle sont présents, à l'extérieur de ladite botte, les deux couteaux T1 et T2. Leurs mouvements de rapprochement sont indiqués par les flèches A- et B-, pour couper en partie basse le lien, le filet ou l'enveloppe de protection qui entoure la botte. Leurs mouvements d'éloignement sont indiqués par les flèches A+ et B+ pour conduire les couteaux T1 et T2 vers leur position de dégagement, permettant le transfert de la botte défaite vers le démêleur. Les mouvements synchronisés des deux couteaux T1 et T2 permettent de maintenir en place la botte B dans la paroi concave Pv pendant le sectionnement du lien, du filet ou de l'enveloppe de protection. La coupe est franche, ce qui libère immédiatement la tension existant dans le moyen de conditionnement. Celui-ci peut être retiré plus facilement de la botte.

Cependant, et dans un mode de construction simplifié, le dispositif de coupe peut ne comporter qu'un seul couteau à mouvement transversal.

La partie tranchante de chaque couteau T1, T2 présente sur la Fig. 6 une géométrie en forme de triangle dont le sommet saillant est dirigé vers le haut sur cette Fig. Les deux flancs du couteau sont tranchants. Il est préférablement fabriqué dans un acier au carbone pour conserver son pouvoir tranchant relativement longtemps.

Sur les Figs. 5 et 7, chaque couteau T est prolongé d'une lame de guidage Lg qui est tournée en direction de l'autre couteau. Les deux lames de guidage Lg1 et Lg2 sont disposées parallèlement et à faible distance l'une à l'autre et peuvent coulisser à faible distance l'une contre l'autre. Elles sont en appui, par leur chant inférieur, sur une barre de frottement Bf pour être guidées pendant leur déplacement. La barre de frottement Bf est avantageusement formée d'une multitude de barrettes espacées d'interstices et au travers desquels peuvent tomber des résidus de matière végétale provenant des bottes et qui sont susceptibles de perturber le coulissement des lames de guidage Lg.

Sur la Fig. 7, deux coiffes Cf1 et Cf2 recouvrent respectivement les deux vérins M1 et M2 pour les protéger. Elles sont disposées parallèlement l'une à l'autre. Chaque coiffe Cf présente en section une géométrie en forme de U et dans laquelle prend place un vérin correspondant. Les deux flancs latéraux tournés en vis-à-vis des deux coiffes Cf sont utilisés comme paroi de guidage pour les deux lames de guidage Lg1 et Lg2.

Sur la Fig. 3, deux caches Ch font saillie des deux parois latérales 120 pour recouvrir les couteaux T lorsqu'ils sont disposés dans leur position de dégagement. Pour permettre le passage de la botte vers le caisson 110, les couteaux T sont dans leur position de dégagement, disposés à l'extérieur des deux parois latérales. Un seul cache Ch est visible sur cette vue en perspective.

Sur la Fig. 1, la machine 100 comporte un réceptacle Rc, disposé contre une paroi latérale 120 et qui est destiné à stocker temporairement, le lien, le filet ou l'enveloppe de protection retiré(e) de la botte.

Sur la Fig. 2, la machine 100 est équipée d'un boîtier de commande électrique Bc destiné à mettre en oeuvre le fonctionnement de l'ouverture et de la fermeture de la porte 140, ainsi qu'à mettre en oeuvre le fonctionnement du dispositif de coupe 300.

Le fonctionnement de la machine 100 se présente de la manière suivante. La machine 100 est attelée et raccordée à un engin de manutention. Le conducteur de l'engin ou l'intervenant commande, à l'aide du boîtier Bc, l'ouverture de la porte 140, puis charge une botte cylindrique sur la porte ouverte 140 de sorte à la déposer dans la paroi concave Pv, comme cela apparaît sur la Fig. 4. Il commande le fonctionnement des vérins M1 et M2 dans un cycle aller et retour. Les couteaux T coupent alors le lien, le filet ou l'enveloppe de protection qui entoure la botte cylindrique, puis s'escamotent vers leur position de dégagement. Le conducteur de l'engin ou un intervenant dégage alors ce moyen de conditionnement de la botte en le rabattant par dessus la porte 140, puis commande la fermeture partielle de celle-ci conduisant la botte B à se déplacer, par roulage, sur le moyen de déplacement. Il peut alors retirer facilement le moyen de conditionnement et le jeter dans le réceptacle Rc.

L'effort nécessaire pour retirer le lien, le filet ou l'enveloppe de protection est réduit de pratiquement d'un facteur 5 si on le compare à l'effort nécessaire pour retirer le moyen de conditionnement d'une botte cylindrique, coupé à mi-hauteur de la botte, par exemple à l'aide d'un couteau utilisé par le conducteur d'une machine conventionnelle. S'agissant d'un filet de protection, un effort moyen de traction de 98 N est nécessaire pour retirer ledit filet de protection de la botte cylindrique et préalablement coupé dans la partie basse de la botte T, par les couteaux T de la machine 100, alors qu'un effort de pratiquement 570 N est nécessaire avec une machine dépourvue du dispositif de coupe de la machine de l'invention. Le moyen de conditionnement peut être retiré manuellement.

Le conducteur commande la fermeture complète de la porte 140. Il commande ensuite le fonctionnement du démêleur 270 et de la turbine pour pailler la botte B.

Sur la Fig. 8, la machine 100 convient également pour pailler des bottes B parallélépipédiques comme celle qui est présentée sur cette Fig. La botte B est chargée dans la machine 100 pour reposer sur la paroi de fond Pf et notamment dans le voisinage de la fente Ft de sorte que le ou les couteaux T puissent entailler la face inférieure de la botte B pour couper le lien, le filet ou l'enveloppe de protection qui l'entoure. L'intervenant commande le fonctionnement du dispositif de coupe 300, puis il dégage et retire le moyen de conditionnement de la botte B. L'effort pour retirer le lien, le filet ou l'enveloppe de protection d'une botte parallélépipédique est réduit de pratiquement d'un facteur 10 par rapport à une machine conventionnelle. S'agissant d'un ensemble de ficelles, un effort moyen de traction de 157 N est nécessaire pour retirer les ficelles d'une botte parallélépipédique et préalablement coupées dans la partie basse de la botte T, par les couteaux T de la machine 100, alors qu'un effort de pratiquement 1660 N est nécessaire avec une machine dépourvue du dispositif de coupe de la machine de l'invention. La botte parallélépipédique est disposée sur la paroi de fond Pf, dans sa position la plus défavorable, c'est-à-dire avec les noeuds des ficelles disposés en vis-à-vis de la ladite paroi de fond. Le moyen de conditionnement peut, là encore, être retiré manuellement.

Le dispositif de coupe 300 est disposé dans la paroi de fond Pf de telle manière qu'il puisse agir pratiquement vers le milieu de la botte B. On ne tire alors le moyen de conditionnement pour l'extraire, que sur une moitié de la botte. L'effort pour retirer le moyen de conditionnement des deux côtés de la botte est sensiblement le même.

Préférentiellement la botte B est disposée sur la paroi de fond Pf, avec ses noeuds tournés vers le haut pour réduire encore l'effort de traction sur le moyen de conditionnement pour l'extraire de la botte B.

Le conducteur commande ensuite le fonctionnement du démêleur 270 et de la turbine pour pailler la botte B.

Un moyen de déplacement est utilisé dans la machine100 pour déplacer la botte vers le démêleur 270 dans la perspective d'être paillée par la turbine 180.

La machine 100 de l'invention, équipée de son dispositif de coupe 300, est capable de couper facilement le lien, le filet ou l'enveloppe de protection qui ceinture la botte avant de procéder à son paillage.

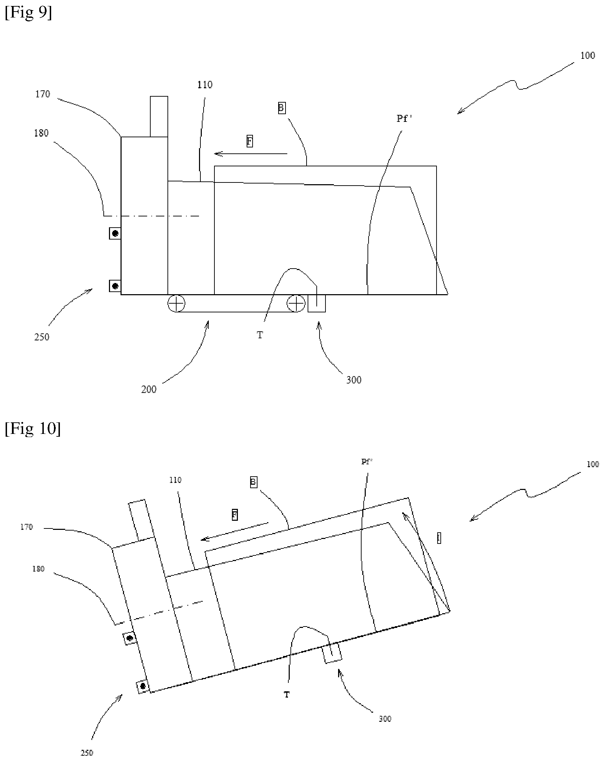

Dans une première variante de réalisation, représentée sur la Fig. 9, la machine 100 est dépourvue de porte, mais conserve cependant son moyen de déplacement 200 de la botte B vers le démêleur. La botte peut être du type cylindrique ou parallélépipédique.

La botte B est chargée dans le caisson 110, par exemple à l'aide d'un engin de levage ou est chargée frontalement en la maintenant en butée, par exemple, contre un mur.

Le caisson 110 est pourvu d'une paroi de fond Pf ' qui est plane et lisse et sur laquelle repose la botte B. La paroi de fond Pf ' est prolongée, pratiquement dans le même plan, par le moyen de déplacement 200 qui s'étend jusqu'à la volute 170. Le dispositif de coupe 300 prolonge la paroi de fond Pf ', en étant interposé transversalement entre la paroi de fond Pf ' et le moyen de déplacement 200.
Les couteaux T sont ainsi disposés pour pénétrer la face inférieure de la botte B afin de couper le lien, le filet, l'enveloppe de protection sous ladite botte.

On procède dans un premier temps à la coupe et au retrait du lien, du filet ou de l'enveloppe de protection. On procède ensuite au paillage de la botte défaite.

Le déplacement de la botte B vers le démêleur est mis en oeuvre par l'intermédiaire du moyen de déplacement 200.

Dans une seconde variante de réalisation, représentée sur la Fig. 10, la machine 100 est dépourvue de porte et dépourvue de moyen de déplacement de la botte B vers le démêleur. La botte peut être du type cylindrique ou parallélépipédique.

Le caisson 110 est pourvu d'une paroi de fond Pf ' qui est plane et lisse et sur laquelle repose la botte B. Le dispositif de coupe 300 est disposé transversalement dans la paroi de fond Pf 'pour agir dans la face inférieure de la botte B. On procède dans un premier temps à la coupe et au retrait du lien, du filet ou de l'enveloppe de protection. On procède ensuite au paillage de la botte défaite.

Le déplacement de la botte B vers le démêleur est mis en oeuvre par la gravité, en utilisant l'engin de manutention sur lequel la machine est attelée, pour incliner suffisamment la machine 100 afin que la botte glisse sur ladite paroi de fond pour venir en contact avec le démêleur. La flèche I indique le mouvement d'inclinaison de la machine 100.

Il est utile de préciser que dans la machine de l'invention la présence du démêleur 270 n'est pas indispensable. En effet, la turbine constitutive de l'organe d'éjection 180 de la machine, peut suffire pour pailler la matière constitutive de la botte défaite.

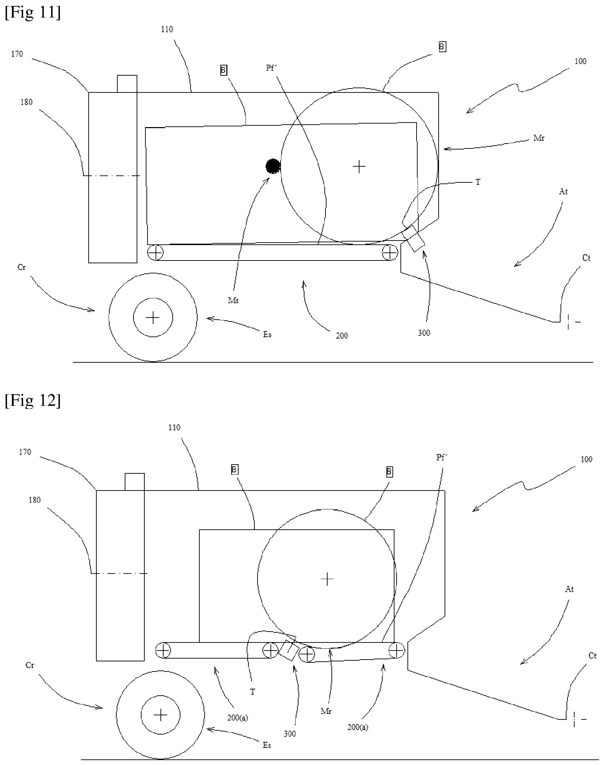

Dans une troisième variante de réalisation présentée sur la Fig. 11, la machine 100 n'est plus du type porté, mais du type tracté. Elle se présente sous la forme d'une remorque. Son caisson 110 est ainsi monté sur un châssis roulant Cr. Celui-ci comprend au moins un essieu Es, ainsi qu'un attelage At comprenant un crochet Ct destiné à être accroché sur un engin de traction. La machine 100 comprend encore un organe d'éjection 180, un moyen de déplacement 200 destiné à déplacer la botte B vers l'organe d'éjection 180. Le moyen de déplacement 200 forme, dans sa partie supérieure, la paroi de fond Pf ' sur laquelle repose la botte B cylindrique ou la botte B parallélépipédique.

Le dispositif de coupe 300 est monté dans la partie avant de la machine 100 à proximité de l'attelage At et dans le prolongement du moyen de déplacement 200 pour agir dans la partie basse de la botte B. La machine 100 est avantageusement équipée d'un moyen de retenue Mr destiné à maintenir en place une botte cylindrique B en contact avec le dispositif de coupe 300. Le moyen de retenue Mr comprend une barre disposée transversalement dans le caisson 110 pour la caler d'un côté. Le dispositif de coupe 300 est, sur cette Fig. 11, monté de manière oblique, permettant de caler la botte cylindrique de l'autre côté.

La remorque dispose d'une paroi frontale surmontant l'attelage At et qui peut être utilisée comme moyen de retenue Mr pour caler la botte cylindrique de l'autre côté.

On procède dans un premier temps à la coupe et au retrait du lien, du filet ou de l'enveloppe de protection. On procède ensuite au paillage de la botte défaite en la déroulant en faisant fonctionner le moyen de déplacement 200. La barre Mr est montée de manière amovible ou escamotable pour pouvoir pailler également des bottes parallélépipédiques.

Pour pailler une botte parallélépipédique B, on utilise dans un premier temps, le moyen de déplacement 200 pour qu'elle puisse entrer en contact avec le dispositif de coupe 300 et procéder à la coupe et au retrait du lien, du filet ou de l'enveloppe de protection. Dans un second temps on inverse le fonctionnement du sens de déplacement du moyen de déplacement 200 pour procéder au paillage de la botte défaite.

Dans une quatrième variante de réalisation présentée sur la Fig. 12, la machine 100 comprend un organe d'éjection 180 et deux moyens de déplacement 200(a) et 200(b) de la botte B. Ils sont disposés dans la partie inférieure du caisson 110 et à la suite l'un de l'autre et ils sont destinés à déplacer la botte B vers l'organe d'éjection 180. Les deux moyens de déplacement 200(a) et 200(b) forment, dans leur partie supérieure, la paroi de fond Pf ' sur laquelle repose la botte B cylindrique ou la botte B parallélépipédique.

Le dispositif de coupe 300 est disposé transversalement entre les deux moyens de déplacement 200 de la botte B pour agir pratiquement au niveau le plus bas de la botte B. La machine 100 est équipée d'un moyen de retenue Mr destiné à maintenir en place une botte cylindrique B en contact avec le dispositif de coupe 300. Le moyen de retenue Mr est constitué d'une paroi concave formée dans la partie supérieure du moyen de déplacement 200.

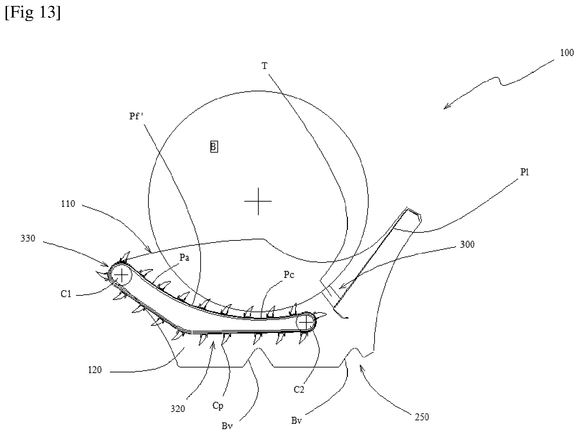

Dans une cinquième variante de réalisation de la machine 100 présentée sur la Fig. 13, celle-ci est conçue pour dérouler une botte cylindrique pour mettre en oeuvre la distribution d'un fourrage. La machine est ainsi dépourvue d'organe d'éjection, mais incorpore un organe de déroulement 320 de la botte B cylindrique pour la dérouler.

La machine 100 est définie d'un point de vue structurel par un caisson 110 délimité par deux parois latérales 120. Elle est équipée d'un dispositif d'attelage 250 pouvant coopérer avec un attelage correspondant d'un engin porteur de manutention. Le dispositif d'attelage 250 comprend, dans un mode de réalisation avantageux, deux embrèvements Bv creusant le bord inférieur d'au moins une paroi latérale 120 pour y réceptionner respectivement deux doigts d'un porte-outil.

L'organe de déroulement 320 se compose de deux cylindres C1 et C2 tenus entre les parois latérales 120 et autour desquels peut circuler en boucle un moyen de déplacement 330, constitué, sur cette Fig. 13, d'une paire de chaînes réunies à intervalles réguliers par des tasseaux capables de faire tourner la botte, en circulant autour de pignons dont sont pourvus les deux cylindres C1 et C2. Ceux-ci centrés respectivement autours de deux arbres. Les tasseaux peuvent être pourvus de crampons Cp pour mordre la surface cylindrique de la botte pour mieux l'entraîner à rotation. On remarquera que le brin supérieur de chacune des chaînes suit une trajectoire concave, par exemple en étant guidé sur une glissière à géométrie concave, pour que la botte B demeure positionnée entre les deux cylindres pendant son déroulement. Le moyen de déplacement 330 inclut ainsi une portion concave Pc de positionnement de la botte B prolongée par une portion ascendante Pa orientée vers l'extérieur de la machine.

L'un des arbres est relié à un moyen d'entraînement à rotation, tel qu'un moteur hydraulique ou un engrenage.

Le moyen de déplacement 330 peut inclure un tapis roulant sous-jacent aux tasseaux pour éviter que le fourrage déplacé ne retombe par terre, c'est-à-dire en dehors de l'emplacement prévu pour son dépôt.

Une plaque Pl prolonge la paroi cylindrique de l'un, C2, des deux cylindres pour caler d'un bord la botte de fourrage pendant que son dévidement intervient de l'autre bord au niveau de l'autre cylindre C1.

La botte B est déroulée sur le moyen de déplacement 330 et sa nappe est entraînée sur la portion ascendante Pa dudit moyen de déplacement 330 pour être déversée en contre-bas.

L'organe de déroulement 320 forme, dans la partie supérieure du moyen de déplacement 200, la paroi de fond Pf ' sur laquelle repose la botte B cylindrique.

L'inclinaison de la plaque Pl est orientée pour monter vers l'extérieur de la machine 100, considérée dans sa position d'utilisation.

Le dispositif de coupe 300 est fixé dans la partie basse de la plaque Pl. Il est disposé dans le prolongement de la paroi de fond Pf'.

Dans la machine 100 de l'invention, le dispositif de coupe 300 est disposé à l'endroit où repose la botte B ou dans le voisinage de l'endroit où repose la botte B. Il peut ainsi couper le lien, le filet ou l'enveloppe de protection dans la partie basse de la botte B.

Le dispositif de coupe 300 peut ainsi être disposé dans l'environnement proche de la paroi de fond Pf ou Pf 'formant la paroi de réception de la botte ou dans l'environnement proche du moyen de déplacement 200 ou dans l'environnement proche de l'organe de déroulement 320 ou du moyen de déplacement 330.

## Revendications

1. Machine (100) pour défaire et distribuer des bottes de litière animale ou des bottes de fourrage, comprenant,
- une paroi de fond (Pf ; Pf ') destinée à réceptionner la botte (B),
- un organe d'éjection (180) de la matière constitutive de la botte ou un organe de déroulement (320) de la botte,
- un dispositif de coupe (300) du lien, du filet ou de l'enveloppe de protection qui entoure ladite botte et qui inclut un organe de coupe (T),
**caractérisée en ce que** le dispositif de coupe (300) est disposé dans la paroi de fond (Pf ; Pf ') ou dans son prolongement ou dans son voisinage et de sorte qu'il soit disposé à l'endroit où repose la botte (B) ou dans le voisinage de l'endroit où repose la botte (B) et qu'il puisse agir dans la partie basse de la botte,.

2. Machine (100) selon la revendication 1, **caractérisée en ce que** le dispositif de coupe (300) comprend au moins un couteau (T) monté de manière mobile transversalement par rapport à ladite paroi de fond.

3. Machine (100) selon l'une quelconque des revendications précédentes, **caractérisée en ce que** le dispositif de coupe (300) comprend deux couteaux (T1 et T2) montés à coulissement l'un vers l'autre.

4. Machine (100) selon l'une quelconque des revendications 2 ou 3, **caractérisée en ce que** ledit ou chaque couteau (T) est attelé à un moyen de manoeuvre (M) à mouvement linéaire.

5. Machine (100) selon l'une quelconque des revendications 2, 3 ou 4, **caractérisée en ce que** la partie tranchante dudit ou de chaque couteau (T) présente, en vue de face, une géométrie triangulaire, les deux flancs du couteau étant tranchants.

6. Machine (100) selon l'une quelconque des revendications 3 à 5, **caractérisée en ce que** chaque couteau (T) est prolongé d'une lame de guidage (Lg) qui est tournée en direction de l'autre couteau, les deux lames de guidage (Lg1 et Lg2) étant disposées parallèlement et à faible distance l'une à l'autre, les deux lames de guidage (Lg1 et Lg2) étant en appui, par leur chant inférieur, sur une barre de frottement (Bf) pour être guidées pendant leur déplacement.

7. Machine (100) selon l'une quelconque des revendications précédentes, **caractérisée en ce qu'**elle est pourvue, d'un dispositif d'attelage (250), destiné à permettre à un engin de manutention, d'atteler la machine pour la porter, la manoeuvrer et **en ce que** la machine (100) est pourvue,
d'un caisson (110) de réception d'une botte (B),
d'un moyen de déplacement (200) de la botte en direction de l'organe d'éjection (180),
d'une porte (140) de chargement et de transfert d'une botte (B), ladite porte étant montée de manière articulée sur le caisson (110) entre une position de chargement d'une botte et une position de transfert de ladite botte dans le caisson (110), ladite porte incluant la paroi de fond (Pf) pour la botte (B), le dispositif de coupe (300) étant monté dans la porte (140).

8. Machine (100) selon la revendication 7, **caractérisée en ce que** la paroi de fond (Pf) de la botte (B) comprend une paroi concave (Pv) conformée pour réceptionner la paroi cylindrique d'une botte cylindrique (B), le dispositif de coupe (300) étant disposé pour pouvoir couper le moyen de conditionnement de la botte (B) lorsqu'elle est positionnée dans la paroi concave (Pv).

9. Machine (100) selon l'une quelconque des revendications 1 à 6, **caractérisée en ce qu'**elle est pourvue, d'un dispositif d'attelage (250), destiné à permettre à un engin de manutention, d'atteler la machine pour la porter, la manoeuvrer et **en ce que** la machine (100) est pourvue,
d'un caisson (110) de réception d'une botte (B) incluant la paroi de fond (PF') pour la botte (B),
le dispositif de coupe (300) étant monté dans la paroi de fond (Pf ') ou dans le prolongement de la paroi de fond (Pf ') pour la botte (B).

10. Machine (100) selon l'une quelconque des revendications 1 à 6, **caractérisée en ce qu'**elle est montée sur un châssis roulant (Cr),
la machine (100) étant pourvue, d'un attelage (At) comprenant un crochet (Ct), destiné à permettre à un engin de traction, d'atteler la machine pour la tracter et **en ce que** la machine (100) est pourvue,
d'un caisson (110) de réception d'une botte (B),
d'un moyen de déplacement (200) de la botte en direction de l'organe d'éjection (180), le moyen de déplacement (200) incluant la paroi de fond (Pf') pour la botte (B).

11. Machine (100) selon l'une quelconque des revendications 1 à 6, **caractérisée en ce qu'**elle est pourvue, d'un dispositif d'attelage (250), destiné à permettre à un engin de manutention, d'atteler la machine pour la porter, la manoeuvrer et **en ce que** la machine (100) est pourvue,
d'un caisson (110) de réception d'une botte (B) cylindrique,
d'un organe de déroulement (320) de la botte (B) cylindrique, incluant une portion concave (Pc) de positionnement de la botte (B) prolongée par une portion ascendante (Pa) orientée vers l'extérieur de ladite machine,
l'organe de déroulement (320) incluant la paroi de fond (Pf ') pour la botte (B).

## Patentansprüche

1. Maschine (100) zum Lösen und Ausgeben von Ballen aus Tierstreu oder Futterballen, die Folgendes aufweist,
- eine Bodenwand (Pf; Pf') zur Aufnahme des Ballens (B),
- ein Organ zum Auswerfen (180) des Materials, aus dem der Ballen besteht, oder ein Organ zum Abrollen (320) des Ballens,
- eine Vorrichtung (300) zum Schneiden des Bandes, des Netzes oder der Schutzhülle, die den Ballen umgibt und ein Schneideelement (T) enthält,
**dadurch gekennzeichnet, dass** die Schneidvorrichtung (300) in der Bodenwand (Pf; Pf') oder in deren Verlängerung oder in deren Nähe angeordnet ist und zwar so, dass sie an der Stelle, an der der Ballen (B) liegt, oder in der Nähe der Stelle, an der der Ballen (B) liegt, angeordnet ist und im unteren Teil des Ballens wirken kann.

2. Maschine (100) nach Anspruch 1, **dadurch gekennzeichnet, dass** die Schneidvorrichtung (300) mindestens ein Messer (T) aufweist, das quer zu der Bodenwand beweglich angebracht ist.

3. Maschine (100) nach einem der vorhergehenden Ansprüche, **dadurch gekennzeichnet, dass** die Schneidvorrichtung (300) zwei Messer (T1 und T2) aufweist, die verschiebbar zueinander angebracht sind.

4. Maschine (100) nach einem der Ansprüche 2 oder 3, **dadurch gekennzeichnet, dass** das oder jedes Messer (T) an ein Betätigungsmittel (M) mit linearer Bewegung angekuppelt ist.

5. Maschine (100) nach einem der Ansprüche 2, 3 oder 4, **dadurch gekennzeichnet, dass** der scharfe Teil des oder jedes Messers (T) in der Vorderansicht eine dreieckige Geometrie aufweist, wobei beide Flanken des Messers scharf sind.

6. Maschine (100) nach einem der Ansprüche 3 bis 5, **dadurch gekennzeichnet, dass** jedes Messer (T) um ein Führungsblatt (Lg) verlängert ist, das in Richtung des anderen Messers weist, wobei die beiden Führungsblätter (Lg1 und Lg2) parallel und in geringem Abstand zueinander angeordnet sind und die beiden Führungsblätter (Lg1 und Lg2) mit ihrer Unterkante auf einer Reibleiste (Bf) aufliegen, um während ihrer Bewegung geführt zu werden.

7. Maschine (100) nach einem der vorhergehenden Ansprüche, **dadurch gekennzeichnet, dass** sie mit einer Kupplungsvorrichtung (250) versehen ist, die dazu bestimmt ist, es einem Handhabungsgerät zu ermöglichen, die Maschine anzukuppeln, um sie zu tragen und zu betätigen, und dadurch, dass die Maschine (100) versehen ist,
mit einem Kasten (110) zur Aufnahme eines Ballens (B),
mit einem Mittel zum Verschieben (200) des Ballens in Richtung des Auswurforgans (180),
mit einer Klappe (140) zum Laden und Überführen eines Ballens (B), wobei die Klappe zwischen einer Position zum Laden eines Ballens und einer Position zum Überführen des Ballens in den Kasten (110) gelenkig an dem Kasten (110) angebracht ist, wobei die Klappe die Bodenwand (Pf) für den Ballen (B) enthält, wobei die Schneidvorrichtung (300) in der Klappe (140) angebracht ist.

8. Maschine (100) nach Anspruch 7, **dadurch gekennzeichnet, dass** die Bodenwand (Pf) des Ballens (B) eine konkave Wand (Pv) aufweist, die so geformt ist, dass sie die zylindrische Wand eines zylindrischen Ballens (B) aufnimmt, wobei die Schneidvorrichtung (300) so angeordnet ist, dass sie das Verpackungsmittel des Ballens (B) abschneiden kann, wenn dieser in der konkaven Wand (Pv) positioniert ist.

9. Maschine (100) nach einem der Ansprüche 1 bis 6, **dadurch gekennzeichnet, dass** sie mit einer Kupplungsvorrichtung (250) versehen ist, die dazu bestimmt ist, es einem Handhabungsgerät zu ermöglichen, die Maschine anzukuppeln, um sie zu tragen und zu betätigen, und dadurch, dass die Maschine (100) versehen ist,
mit einem Kasten (110) zur Aufnahme eines Ballens (B), der die Bodenwand (Pf') für den Ballen (B) enthält,
wobei die Schneidvorrichtung (300) in der Bodenwand (Pf') oder in der Verlängerung der Bodenwand (Pf') für den Ballen (B) angebracht ist.

10. Maschine (100) nach einem der Ansprüche 1 bis 6, **dadurch gekennzeichnet, dass** sie auf einem rollenden Rahmen (Cr) angebracht ist,
wobei die Maschine (100) mit einer Kupplung (At) versehen ist, die einen Haken (Ct) aufweist, der dazu bestimmt ist, es einem Zugfahrzeug zu ermöglichen, die Maschine anzukuppeln, um sie zu ziehen, und dass die Maschine (100) versehen ist,
mit einem Kasten (110) zur Aufnahme eines Ballens (B),
mit einem Mittel zum Verschieben (200) des Ballens in Richtung des Auswurforgans (180), wobei das Mittel zum Verschieben (200) die Bodenwand (Pf') für den Ballen (B) enthält.

11. Maschine (100) nach einem der Ansprüche 1 bis 6, **dadurch gekennzeichnet, dass** sie mit einer Kupplungsvorrichtung (250) versehen ist, die dazu bestimmt ist, es einem Handhabungsgerät zu ermöglichen, die Maschine anzukuppeln, um sie zu tragen und zu betätigen, und dadurch, dass die Maschine (100) versehen ist,
mit einem Kasten (110) zur Aufnahme eines zylindrischen Ballens (B),
mit einem Organ zum Abrollen (320) des zylindrischen Ballens (B), das einen konkaven Abschnitt (Pc) zur Positionierung des Bündels (B) enthält, der durch einen ansteigenden Abschnitt (Pa) verlängert wird, der zur Außenseite der genannten Maschine gerichtet ist,
Wobei das Organ zum Abrollen (320) die Bodenwand (Pf') für den Ballen (B) enthält.

## Claims

1. Machine (100) for undoing and dispensing bales of animal litter or bales of fodder, comprising,
- a bottom wall (Pf; Pf') intended to receive the bale (B),
- an ejection member (180) for ejecting the constituent matter of the bale or an unwinding member (320) for unwinding the bale,
- a cutting device (300) for cutting the link, the thread or the protective jacket surrounding said bale and which includes a cutting member (T),
**characterized in that** the cutting device (300) is disposed in the bottom wall (Pf; Pf') or in the extension thereof or in the vicinity thereof and such that it is disposed at the point where the bale (B) rests or in the vicinity of the point where the bale (B) rests and it can act in the lower part of the bale.

2. Machine (100) according to Claim 1, **characterized in that** the cutting device (300) comprises at least one knife (T) mounted to be movable transversely with respect to said bottom wall.

3. Machine (100) according to either one of the preceding claims, **characterized in that** the cutting device (300) comprises two knives (T1 and T2) mounted to slide towards one another.

4. Machine (100) according to either one of Claims 2 and 3, **characterized in that** said or each knife (T) is attached to a linear motion manoeuvring means (M).

5. Machine (100) according to any one of Claims 2, 3 and 4, **characterized in that** the sharp part of said or each knife (T) has, when seen from the front, a triangular geometry, the two flanks of the knife being sharp.

6. Machine (100) according to any one of Claims 3 to 5, **characterized in that** each knife (T) is extended by a guiding blade (Lg) which is turned towards the other knife, the two guiding blades (Lg1 and Lg2) being disposed parallel to and at a small distance from one another, the two guiding blades (Lg1 and Lg2) being pressed, by their bottom edge, onto a friction bar (Bf) to be guided during the displacement thereof.

7. Machine (100) according to any one of the preceding claims, **characterized in that** it is provided with a hitching device (250), intended to allow a handling vehicle to hitch the machine to carry it, manoeuvre it, and **in that** the machine (100) is provided
with a box (110) for receiving a bale (B),
with a displacement means (200) for displacing the bale towards the ejection member (180),
with a door (140) for loading and transferring a bale (B), said door being mounted to be articulated on the box (110) between a bale loading position and a position for transferring said bale into the box (110), said door including the bottom wall (Pf) for the bale (B), the cutting device (300) being mounted in the door (140) .

8. Machine (100) according to Claim 7, **characterized in that** the bottom wall (Pf) of the bale (B) comprises a concave wall (Pv) shaped to receive the cylindrical wall of a cylindrical bale (B), the cutting device (300) being disposed to be able to cut the packaging means of the bale (B) when it is positioned in the concave wall (Pv).

9. Machine (100) according to any one of Claims 1 to 6, **characterized in that** it is provided with a hitching device (250), intended to allow a handling vehicle to hitch the machine to carry it, manoeuvre it, and **in that** the machine (100) is provided
with a box (110) for receiving a bale (B) including the bottom wall (Pf') for the bale (B),
the cutting device (300) being mounted in the bottom wall (Pf') or in the extension of the bottom wall (Pf') for the bale (B).

10. Machine (100) according to any one of Claims 1 to 6, **characterized in that** it is mounted on a rolling chassis (Cr),
the machine (100) being provided with a hitch (At) comprising a hook (Ct), intended to allow a traction vehicle to attach the machine to pull it and **in that** the machine (100) is provided
with a box (110) for receiving a bale (B),
with a displacement means (200) for displacing the bale towards the ejection member (180), the displacement means (200) including the bottom wall (Pf') for the bale (B).

11. Machine (100) according to any one of Claims 1 to 6, **characterized in that** it is provided with a hitching device (250), intended to allow a handling vehicle to hitch the machine to carry it, manoeuvre it, and **in that** the machine (100) is provided
with a box (110) for receiving a cylindrical bale (B),
with an unwinding member (320) for unwinding the cylindrical bale (B), including a concave portion (Pc) for positioning the bale (B) extended by an ascending portion (Pa) oriented towards the outside of said machine,
the unwinding member (320) including the bottom wall (Pf') for the bale (B).
